# EUROPÄISCHE PATENTANMELDUNG

(11) **EP 3 578 415 A1**
(43) Veröffentlichungstag der Anmeldung: **11.12.2019**
(21) Anmeldenummer: 18176618.9
(22) Anmeldetag: 07.06.2018
(51) Int. Cl.: B60P 3/16, B60P 1/36

(54) **TRANSPORTFAHRZEUG**

(71) Anmelder: Saller, Thomas, 84323 Massing (DE)
(72) Erfinder: Saller, Thomas, 84323 Massing (DE)
(74) Vertreter: Rothkopf, Ferdinand

(57) **Zusammenfassung**

Die Erfindung betrifft ein Transportfahrzeug (10) mit einer Transporteinrichtung (22), einem Fahrantrieb (34) und einem Nebenantrieb (54), wobei der Nebenantrieb leistungsschwächer als der Fahrantrieb gestaltet ist und zum Bewegen mindestens einer Komponente der Transporteinrichtung beim Beladen und/oder Entladen der Transporteinrichtung vorgesehen ist.

## Beschreibung

### Hintergrund der Erfindung

Die Erfindung betrifft ein Transportfahrzeug mit einer Transporteinrichtung, einem Fahrantrieb und einem Nebenantrieb.

Transportfahrzeuge sind Fahrzeuge, wie LKWs und Lieferwagen, welche Güter über die Straße zu ihren Zielorten transportieren. Die Güter werden dabei in einer Transporteinrichtung, wie zum Beispiel einem Kastenaufbau, aufbewahrt. Mithilfe eines Fahrantriebs des Transportfahrzeugs, in der Regel einem Verbrennungsmotor, bewegt sich das Transportfahrzeug fort. Nebenantriebe diverser Art finden bereits in vielen Transport- und anderen Fahrzeugen Verwendung, zum Beispiel als Anlasser für den Verbrennungsmotor. Oft wird der Verbrennungsmotor auch dazu verwendet, um eine an dem Transportfahrzeug angebrachte Vorrichtung für das Beladen und/oder Entladen der Güter anzutreiben. Der Verbrennungsmotor treibt beispielsweise ein Hydraulikaggregat, mittels dem ein Ölmotor oder ein Hubzylinder betätigt wird. Somit ist der Verbrennungsmotor auch in Stehzeiten des Transportfahrzeugs in Betrieb, verbraucht dabei Kraftstoff und stößt Schadstoffe aus.

### Zugrundeliegende Aufgabe

Der Erfindung liegt daher die Aufgabe zugrunde ein Transportfahrzeug zu schaffen, welches den Fahrantrieb und den Nebenantrieb derart nutzt, dass Betriebsmittel und Kosten eingespart werden.

### Erfindungsgemäße Lösung

Diese Aufgabe ist erfindungsgemäß mit einem Transportfahrzeug gelöst, bei dem der Nebenantrieb gezielt leistungsschwächer als der Fahrantrieb gestaltet ist und ganz speziell zum Bewegen mindestens einer Komponente der Transporteinrichtung beim Beladen und/oder Entladen der Transporteinrichtung vorgesehen ist.

Erfindungsgemäß hat der Nebenantrieb also eine geringere Leistung als der Fahrantrieb, und vollzieht oder unterstützt das Beladen und/oder das Entladen des Transportfahrzeugs. Während solcher Ladevorgänge steht das Transportfahrzeug üblicherweise auf einer Stelle und bewegt sich nicht fort. Anders als bei bekannten Transportfahrzeugen üblich, ist der erfindungsgemäße Fahrantrieb dabei erfindungsgemäß abgeschaltet. Dadurch werden Betriebsmittel wie Kraftstoff und somit Kosten eingespart. Gerade bei längeren Stehzeiten, die vorrangig beim Entladen auftreten, ist eine Kraftstoffeinsparung besonders groß. Zudem wird die Nutzungsdauer des Fahrantriebs deutlich reduziert. Auch der Schadstoffausstoß und die Lärmbelästigung werden aufgrund des abgeschalteten Fahrantriebs deutlich herabgesetzt. Besonders bevorzugt ist der Nebenantrieb hinsichtlich seiner Leistung relativ zum Fahrantrieb derart dimensioniert und ausgelegt, dass er allein beim Entladen die dabei notwendige Energie zur Verfügung stellen kann, mehr aber auch nicht.

Dies schont nicht nur die Umwelt, sondern verringert auch gesundheitliche Risiken für Personen, die sich in der Nähe des Transportfahrzeugs aufhalten, um beispielsweise das Beladen und/oder Entladen zu unterstützen oder zu beaufsichtigen.

### Vorteilhafte Weiterbildungen der Erfindung

Bei einer vorteilhaften Weiterbildung der Erfindung ist der Fahrantrieb mit einem Verbrennungsmotor und der Nebenantrieb mit einem Elektromotor gestaltet. Bekanntlich wandelt ein Verbrennungsmotor chemische Energie in mechanische Arbeit um, indem in einem Brennraum ein zündfähiges Gemisch aus Kraftstoff und Luft verbrannt wird. Dabei ist der Verbrennungsmotor hier vorzugsweise als Dieselmotor gestaltet. Der Elektromotor wandelt, wie allgemein bekannt, elektrische Energie in mechanische Arbeit um, indem stromdurchflossene Leiterspulen Magnetfelder erzeugen, deren gegenseitige Anziehungs- und Abstoßungskräfte in Bewegung umgesetzt werden. Dabei ist der Elektromotor hier vorzugsweise als umrichtergeführter Synchronmotor oder als bürstenloser Gleichstrommotor gestaltet. Mit dieser Kombination ist einerseits das Fortbewegen des Transportfahrzeuges sicherstellt, andererseits wird das Beladen und/oder Entladen mittels eines emissionsfreien Nebenantriebs ausgeführt, wobei Kraftstoff und somit Kosten eingespart werden.

In einer weiteren vorteilhaften Weiterbildung ist der Nebenantrieb derart gestaltet, dass eine Kraft direkt auf die mindestens eine Komponente der Transporteinrichtung übertragbar ist. Bei einer direkten Kraftübertragung wirkt der Nebenantrieb also direkt auf die Mechanik und/oder die mindestens eine Komponente der Transporteinrichtung, welche zum Beladen und/oder Entladen vorgesehen ist. Ein Vorteil des Nebenantriebs mit direkter Kraftübertragung liegt in der einfachen und preisgünstigen Herstellung, sowie einer geringen Störanfälligkeit. Besonders bevorzugt ist ein solcher Nebenantrieb als Kraftübertragung mittels eines Zahnrades und eines Zahnkranzes oder einer Zahnschiene an die Transporteinrichtung gekoppelt. Besonders bevorzugt ist ein solcher Nebenantrieb, wie unten auch genauer erläutert wird, ferner mittels eines Reibrades gebildet, das als solches zusammen mit seinem Elektromotor als Nebenantrieb sehr einfach nachgerüstet werden kann.

Alternativ ist der Nebenantrieb bevorzugt derart gestaltet, dass eine Kraft indirekt mittels einer Hydraulikpumpe auf die mindestens eine Komponente der Transporteinrichtung übertragbar ist. Bei einer indirekten Kraftübertragung wirkt die vom Nebenantrieb erzeugte Kraft zuerst auf eine Zwischenkomponente, hier insbesondere auf eine Hydraulikpumpe. Diese wandelt mechanische Arbeit in hydraulische Energie um, die bekanntlich mittels einer Flüssigkeit übertragen wird, vorzugsweise mittels mindestens eines Hydraulikschlauchs an eine weitere Antriebskomponente. Diese Antriebskomponente, hier vorzugsweise ein Hydraulikmotor, treibt die zum Be- und/oder Entladen vorgesehene Mechanik und/oder die mindestens eine Komponente der Transporteinrichtung an. Dieses Antreiben erfolgt dabei zwar langsamer, aber dafür deutlich kraftvoller als das Antreiben der Hydraulikpumpe mittels des Nebenantriebs. Dadurch ist es möglich, relativ leistungsschwache Motoren als Nebenantrieb zu verwenden. Ein Vorteil dieser Anordnung ist also, dass das Beladen und Entladen der Transporteinrichtung auch mit einem verhältnismäßig leistungsschwachen Nebenantrieb ausgeführt werden kann. Somit sind auch Motoren verwendbar, deren Leistung für einen direkten Antrieb der zum Be- und Entladen vorgesehenen Mechanik und/oder der mindestens einen Komponente der Transporteinrichtung nicht ausreichen würde.

In einer bevorzugten Ausführungsform ist die Transporteinrichtung mit einer Trommel, und dabei vorzugsweise mit einer Mischtrommel für Beton gestaltet. Die Trommel bzw. ein trommelförmiger Transportbehälter ist vorzugsweise dafür vorgesehen, ein Schüttgut, insbesondere Frischbeton bzw. Fertigbeton beim Transportieren, Entladen und Beladen in Bewegung zu halten. Dadurch wird die Konsistenz des Schüttguts erhalten und somit beispielsweise ein Aushärten des Frischbetons verhindert.

Gerade bei einer solchen Mischtrommel für Beton dauert insbesondere der Entladevorgang häufig vergleichsweise lange. Umso wichtiger ist hier eine Verwendung eines emissionsfreien oder zumindest emissionsarmen Nebenantriebs.

Vorzugsweise wird die Transporteinrichtung, insbesondere die Trommel, mittels eines Reibrads bewegt, insbesondere gedreht. Bevorzugt ist dieses Reibrad zumindest mit einer Kontaktfläche aus Gummi hergestellt und weist ein Profil bzw. eine Struktur auf. Das Reibrad hat den Vorteil, dass die Trommel unabhängig von anderen vorinstallierten Antriebsvorrichtungen von außen angetrieben bzw. gedreht wird. Eine entsprechende Anordnung mit Nebenantrieb und Reibrad lässt sich entsprechend einfach an Transportfahrzeuge, insbesondere an fahrbare Betonmischer, montieren und auch nachrüsten.

In einer vorteilhaften Ausführungsform weist die Transporteinrichtung, die bevorzugt mit einem Kastenaufbau oder einer Pritsche gestaltet ist, einen vom Nebenantrieb bewegbaren Schubboden auf. Der Schubboden, auch als Schiebeboden bezeichnet, ist ein sich bewegender Boden, der aus beweglichen Lamellen hergestellt ist. Diese Lamellen sind vorzugsweise mittels eines hydraulischen Antriebs bewegbar, um ein geladenes Gut in eine bestimmte Richtung zu befördern. Ein Vorteil des Schubbodens liegt in seinen flexiblen Einsatzmöglichkeiten, da sowohl Stückgut als auch lose Güter bzw. Schüttgut befördert werden können. Auch hier eignet sich der erfindungsgemäße Nebenantrieb zum Antreiben bzw. Bewegen des Schubbodens, unter Vermeidung von Schadstoffemission und Kraftstoffverbrauch. Dies führt zu Kosteneinsparungen.

Alternativ und vorteilhaft weist die Transporteinrichtung einen vom Nebenantrieb bewegbaren Abschieber auf. Der Abschieber ist eine innerhalb der Transporteinrichtung verschiebbare Wand zum Entladen des geladenen Guts. Bei dieser Wand handelt es sich vorzugsweise um eine Frontwand bzw. eine Seitenwand an der dem Fahrerhaus zugewandten Seite der Transporteinrichtung. Diese Wand wird auch als Abschiebeschlitten bezeichnet. Bei einer Verwendung des Abschiebers wird im Gegensatz zu anderen Entladevorgängen die Stand-festigkeit des Transportfahrzeugs zu keinem Entladezeitpunkt beeinträchtigt. Zudem ist bei verschlossener Entladeseite ein Verdichten es geladenen Guts möglich. Ein Antreiben bzw. Bewegen des Abschiebers mithilfe des erfindungs-gemäßen Nebenantriebs spart dabei Kraftstoff und somit Kosten. Besonders eignet sich der Nebenantrieb für ein langsames und/oder schubweises Entladen der Transporteinrichtung. Das langsame Entladen der Transporteinrichtung hat den Vorteil, dass ein geladenes Gut, wie beispielsweise Kies, Zement, aber auch Ziegel- und Pflastersteine, oder auch ganze vormontierte Bauteile sofort verarbeitet und/oder verbaut werden können, ohne zunächst zwischengelagert werden zu müssen. Dies gilt für alle vorhergehend und nachfolgend beschriebenen Ausführungsformen der Transporteinrichtung.

In einer weiteren vorteilhaften Ausführungsform weist das Transportfahrzeug eine Zusatzbatterie auf, die separat von einer Batterie des Fahrantriebs angeordnet ist, um den Nebenantrieb allein oder zusätzlich mit Strom zu versorgen. Vorzugsweise wird die Zusatzbatterie aufgeladen, während der Fahrantrieb aktiv ist. Besonders bevorzugt ist die Zusatzbatterie mit einer höheren Kapazität als die Batterie für den Fahrantrieb gestaltet. Mittels der Zusatzbatterie wird eine bessere Abdeckung des Energiebedarfs beim Beladen und Entladen des Transportfahrzeugs gewährleistet. Das Risiko, aufgrund zu wenig verfügbarer elektrischer Energie auf den Fahrantrieb zurückgreifen zu müssen, wird dadurch minimiert.

In einer weiteren vorteilhaften Weiterbildung weist die Transporteinrichtung eine nach unten zu öffnende Klappe auf. Die nach unten zu öffnende Klappe dient dem Entleeren und somit dem Entladen der Transporteinrichtung. Vorteilhafterweise wird die Klappe langsam und mithilfe des erfindungsgemäßen Nebenantriebs geöffnet, wobei das geladenen Gut kontrolliert und unter Vermeidung von Kraftstoffverbrauch und Schadstoffemission entladen wird.

### Kurzbeschreibung der Zeichnungen

Nachfolgend werden Ausführungsbeispiele der erfindungsgemäßen Lösung anhand der beigefügten schematischen Zeichnungen näher erläutert. Es zeigt:
- Fig. 1: ein erstes Ausführungsbeispiel eines Transportfahrzeugs gemäß der Erfindung,
- Fig. 2: ein zweites Ausführungsbeispiel eines Transportfahrzeugs gemäß der Erfindung und
- Fig. 3: ein drittes Ausführungsbeispiel eines Transportfahrzeugs gemäß der Erfindung.

### Detaillierte Beschreibung der Ausführungsbeispiele

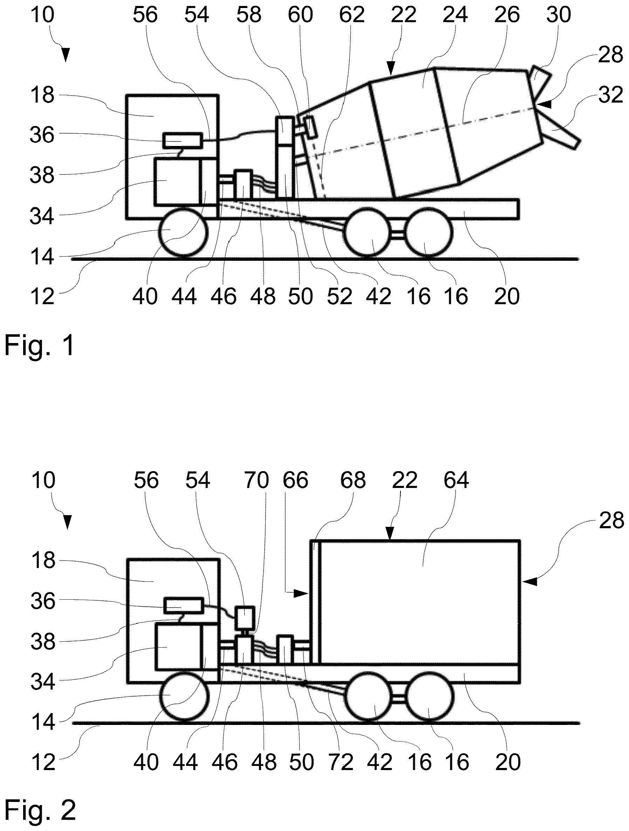

In der Fig. 1 ist ein Transportfahrzeug 10 auf einer Stellfläche 12 dargestellt, auf welcher das Transportfahrzeug 10 mit Vorderrädern 14 und Hinterrädern 16 steht. Im Bereich der Vorderräder 14 ist ein Fahrerhaus 18 angeordnet. Von dem Fahrerhaus 18 erstreckt sich ein Chassis 20 in Richtung der Hinterräder 16 und darüber hinaus. Auf dem Chassis 20 dieses Transportfahrzeugs 10 selbst ist oberhalb der Hinterräder 16 eine Transporteinrichtung 22 angeordnet, die hier mit einer Trommel 24 gestaltet ist.

Die Trommel 24 weist eine durch deren Mitte verlaufende Rotationsachse 26, sowie eine den Fahrerhaus 18 abgewandte Entladeseite 28 mit einer Beladeeinrichtung 30 und einer Entladeeinrichtung 32 auf. In dem Fahrerhaus 18 sind ein Fahrantrieb 34 und eine Batterie 36 angeordnet, welche mittels einer elektrischen Verbindung 38 miteinander verbunden sind. Das Transportfahrzeug 10 ist also ein so genanntes Zugfahrzeug und weist selbst einen eigenen Fahrantrieb 34 auf. Es handelt sich bei dem Transportfahrzeug 10 nicht um einen Anhänger oder Aufleger ohne eigenen Fahrantrieb. An den Fahrantrieb 34 schließt sich ein Getriebe 40 und daran eine Fahrantriebswelle 42 an welche sich in Richtung der Hinterräder 16 erstreckt. Von dem Getriebe 40 erstreckt sich außerdem ein Koppelelement 44 zu einer Hydraulikpumpe 46, die wiederum mittels Hydraulikschläuchen 48 mit einem Hydraulikmotor 50 verbunden ist. Der Hydraulikmotor 50 ist mittels einer Trommelantriebswelle 52 mit der Trommel 24 verbunden.

Zwischen dem Fahrerhaus 18 und der Transporteinrichtung 22 sowie oberhalb des Hydraulikmotors 50 ist ebenfalls an diesem Transportfahrzeug 10 selbst ein Nebenantrieb 54 angeordnet, der mittels einer elektrischen Verbindung 56 an die Batterie 36 angeschlossen ist. Von dem Nebenantrieb 54 streckt sich ein Koppelelement 58, an deren dem Nebenantrieb 54 abgewandten Ende ein Reibrad 60 angeordnet ist, welches auf einer Reibkon-taktlinie 62 auf einer Oberfläche der Trommel 24 aufliegt. Alternativ zum Reibrad 60 und zur Reibkontaktlinie 62 ist ein Zahnrad und ein insbesondere stirnseitiger Zahnkranz an der Trommel 24 vorzusehen.

Grundsätzlich funktioniert das Transportfahrzeug 10 wie viele gewöhnliche Transportfahrzeuge, zum Beispiel Lieferwagen und LKWs. Mittels des im Fahrerhaus 18 angeordneten Fahrantriebs 34, hier ein Dieselmotor, sowie des Getriebes 40 und der Fahrantriebswelle 42 werden die Hinterräder 16 angetrieben, wodurch das Transportfahrzeug 10 fortbewegt wird.

Die ebenfalls in Fahrerhaus 18 angeordnete und mittels der elektrischen Verbindung an den Fahrantrieb 34 angeschlossenen Batterie 36 wird während des Fahrbetriebs aufgeladen.

Beim Be- und Entladen steht das Transportfahrzeug 10 jedoch auf einer Stelle und bewegt sich nicht oder nur sehr wenig fort. Zum Beladen mithilfe der Beladeeinrichtung 30 und/oder zum Entladen mithilfe der Entladeeinrichtung 32 muss dennoch aber mindestens eine Komponente der Transporteinrichtung 22 bewegt werden. Speziell in diesem Ausführungsbeispiel muss die Trommel 24 um ihre Rotationsachse 26 gedreht werden.

Dazu ist in bekannter Weise der Fahrantrieb 34 verwendbar. Indem der Fahrantrieb 34 mittels des Getriebes 40 und des Koppelelements 44 die Hydraulikpumpe 46 antreibt, und diese mittels der Hydraulikschläuche 48 wiederum den Hydraulikmotor 50 antreibt, bewegt der Hydraulikmotor 50 mittels der Trommelantriebswelle 52 letztendlich die Trommel 24. Dabei ist der Fahrantrieb 34, also der Dieselmotor, natürlich aktiv.

Ein zentrales Merkmal eines hier und in den folgenden Figuren dargestellten erfindungsgemäßen Transportfahrzeugs 10 ist hingegen, dass die mindestens eine Komponente der Transporteinrichtung 22, hier die Trommel 24, nicht von dem Fahrantrieb 34, sondern von dem Nebenantrieb 54 bewegt wird, und der Fahrantrieb 34 dabei abgeschaltet ist.

Um die Trommel 24 derart zu bewegen, treibt der Nebenantrieb 54 mittels des Koppelements 58, hier als eine einfache Welle gestaltet, das Reibrad 60 an. Da das Reibrad 60 dabei an der Trommel 24 anliegt, wird diese um ihre Rotationsachse 26 gedreht. Während einer solchen Drehbewegung berührt das Reibrad 60 eine die Trommel 24 umschließende Fläche, wobei sich diese Fläche entlang der Reibkontaktlinie 62 erstreckt. Der Nebenantrieb 54 ist hier mit einem Elektromotor gestaltet. Dieser wird von der Batterie 36 mittels der elektrischen Verbindung 56 mit Strom versorgt.

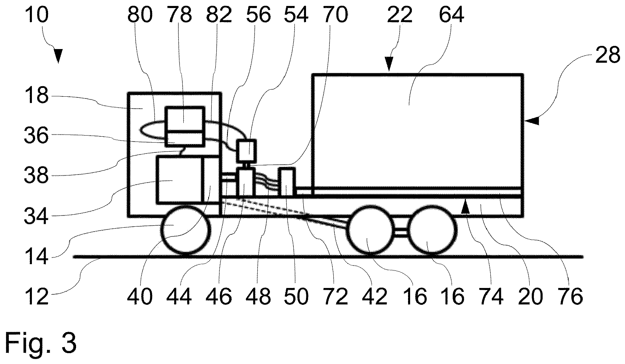

In der Fig. 2 ist ein Transportfahrzeug 10 veranschaulicht, welches in mehreren Basiskomponenten jenem in Fig. 1 entspricht. So steht das Transportfahrzeug 10 auch hier mit den Vorderrädern 14 und den Hinterrädern 16 auf der Stellfläche 12, wobei im Bereich der Vorderräder 14 ist ein Fahrerhaus 18 angeordnet ist, von dem sich ein Chassis 20 in Richtung der Hinterräder 16 und darüber hinaus erstreckt. Ebenfalls wie bereits in Fig. 1 dargestellt, sind in dem Fahrerhaus 18 ein Fahrantrieb 34 angeordnet, angeschlossen an eine Batterie 36 mittels einer elektrischen Verbindung 38. Genauso wie in Fig. 1 angeordnet, weist das Transportfahrzeug 10 auch in diesem Ausführungsbeispiel ein Getriebe 40, eine Fahrantriebswelle 42, ein Koppelelement 44 und eine Hydraulikpumpe 46 auf. Diese Basiskomponenten sind im Übrigen auch in den nachfolgenden Ausführungsbeispielen der Figuren 3 und 4 enthalten und werden daher dort einleitend nur als Basiskomponenten 12 bis 20, sowie 34 bis 46 aufgeführt.

Allerdings ist auf dem Chassis 20 oberhalb der Hinterräder 16 eine Transporteinrichtung 22 angeordnet, die hier mit einem Kastenaufbau 64 gestaltet ist. Dieser Kastenaufbau 64 weist eine Vorderseite 66 gegenüber der Entladeseite 28 auf. An dieser Vorderseite 66 ist ein Abschieber 68 angeordnet. Zwischen dem Fahrerhaus 18 und der Transporteinrichtung 22 ist wie auch in Fig. 1 ein Nebenantrieb 54 angeordnet, der mittels einer elektrischen Verbindung 56 an die Batterie 36 angeschlossen ist. Jedoch ist der Nebenantrieb 54 hier mittels eines Koppelelements 70 mit der Hydraulikpumpe 46, und nicht mit einer der Transporteinrichtung 22 zugehörigen Komponente verbunden. Die Hydraulikpumpe 46 ist auch hier mittels Hydraulikschläuchen 48 mit einem Hydraulikmotor 50 verbunden. Von dem Hydraulikmotor 50 erstreckt sich aber eine Schiebeverbindung 72 zu dem Abschieber 68.

Der Fahrbetrieb dieses Transportfahrzeugs 10 unterscheidet sich nicht von jenem des Transportfahrzeug 10 in Fig. 1, und wird daher nicht noch einmal erläutert.

Dies gilt auch für die nachfolgenden Ausführungsbeispiele in Figuren 3 und 4. Zum Be- und Entladen der Transporteinrichtung 22, hier des Kastenaufbaus 64, muss in diesem Ausführungsbeispiel der Abschieber 68 bewegt werden. Dazu ist auch hier der Fahrantrieb 34 verwendbar.

Wie im Ausführungsbeispiel von Fig. 1 treibt der Fahrantrieb 34 mittels des Getriebes 40 und des Koppelelements 44 die Hydraulikpumpe 46, und diese mittels der Hydraulikschläuche 48 den Hydraulikmotor 50 an. Allerdings bewegt der Hydraulikmotor 50 dann mittels der Schiebeverbindung 72 den Abschieber 68. Nachteilig ist hier wieder, dass der Fahrantrieb 34 aktiv ist.

Auch hier sorgt der Nebenantrieb 54 dafür, dass die mindestens eine Komponente der Transporteinrichtung 22, hier der Abschieber 68, bewegt wird, während der Fahrantrieb 34 abgeschaltet ist. Der Nebenantrieb 54 ist auch hier mit einem Elektromotor gestaltet und wird von der Batterie 36 mittels der elektrischen Verbindung 56 mit Strom versorgt.

Um den Abschieber 68 zu bewegen, wird in diesem Ausführungsbeispiel die zuvor beschrieben Anordnung mit der Hydraulikpumpe 46, den Hydraulikschläuchen 48, dem Hydraulikmotor 50 und der Schiebeverbindung 72 ebenfalls verwendet. Jedoch wird die Hydraulikpumpe 46 hier von dem Nebenantrieb 54 mittels des Koppelelements, hier einer Welle, angetrieben. Die Hydraulikpumpe ist im Übrigen sowohl von dem Koppelelement 44 als auch von der Welle 70 trennbar, jeweils mittels einer hier nicht dargestellten Kuppeleinrichtung.

Fig. 3 zeigt ein Transportfahrzeug 10, welches wieder die bereits in den vorhergehenden Figuren 1 und 2 dargestellten und genauso angeordneten Basiskomponenten 12 bis 20, sowie 34 bis 46 aufweist. Ebenfalls ist auf dem Chassis 20 oberhalb der Hinterräder 16 wieder eine Transporteinrichtung 22 angeordnet, die wie in Fig. 2 mit einem Kastenaufbau 64 gestaltet ist. Allerdings weist dieser Kastenaufbau hier eine Unterseite 74 auf, an der ein Schubboden 76 angeordnet ist. Zwischen dem Fahrerhaus 18 und der Transporteinrichtung 22 ist wie in Figuren 1 und 2 wieder ein Nebenantrieb 54 angeordnet, der mittels einer elektrischen Verbindung 56 an die Batterie 36 angeschlossen ist.

Im Fahrerhaus 18 oberhalb der Batterie 36 dargestellt ist außerdem eine Zusatzbatterie 78 angeordnet, die mit einer elektrischen Verbindung 80 an die Batterie 36 und einer elektrischen Verbindung 82 an den Nebenantrieb 54 angeschlossen ist. Wie in Fig. 2 ist der Nebenantrieb 54 mittels eines Koppelelements 70 mit der Hydraulikpumpe 46, und diese mittels Hydraulikschläuchen 48 mit einem Hydraulikmotor 50 verbunden, von dem sich eine Schiebeverbindung 72 erstreckt. Allerdings erstreckt sich diese Schiebeverbindung 72 hier zum Schubboden 76.

Wie bereits erwähnt, wird der Fahrbetrieb des Transportfahrzeugs 10 hier nicht erneut erläutert. Angemerkt werden soll nur, dass während des Fahrbetriebs neben der Batterie 36 auch die Zusatzbatterie 78 aufgeladen wird. Zum Be- und Entladen der Transporteinrichtung 22, hier wieder des Kastenaufbaus 64, muss in diesem Ausführungsbeispiel der Schubboden 76 bewegt werden. Dazu ist wieder der Fahrantrieb 34 verwendbar.

Die Funktionsweise entspricht dabei jener im Ausführungsbeispiel von Fig. 2, wobei am Ende der Schubboden 76 mittels der Schiebeverbindung 72 bewegt wird. Auch hier besteht naturgemäß wieder der Nachteil, dass der Fahrantrieb 34 aktiv ist.

Der Nebenantrieb 54 sorgt in gleicher Weise wie im Ausführungsbeispiel von Fig. 2 dafür, dass der Schubboden 76 bewegt wird, während der Fahrantrieb 34 abgeschaltet ist. Allerdings wird der Nebenantrieb 54, der auch hier mit einem Elektromotor gestaltet ist, nicht nur von der Batterie 36, sondern außerdem von der Zusatzbatterie 78 mit Strom versorgt.

### Bezugszeichenliste

- 10: Transportfahrzeug
- 12: Stellfläche
- 14: Vorderräder
- 16: Hinterräder
- 18: Fahrerhaus
- 20: Chassis
- 22: Transporteinrichtung
- 24: Trommel
- 26: Rotationsachse
- 28: Entladeseite
- 30: Beladeeinrichtung
- 32: Entladeeinrichtung
- 34: Fahrantrieb
- 36: Batterie
- 38: Elektrische Verbindung
- 40: Getriebe
- 42: Fahrantriebswelle
- 44: Koppelelement / Welle
- 46: Hydraulikpumpe
- 48: Hydraulikschläuche
- 50: Hydraulikmotor / Ölrotor
- 52: Trommelantriebswelle
- 54: Nebenantrieb
- 56: Elektrische Verbindung
- 58: Koppelelement / Welle
- 60: Reibrad
- 62: Reibkontaktlinie
- 64: Kastenaufbau
- 66: Vorderseite
- 68: Abschieber
- 70: Koppelelement / Welle
- 72: Schiebeverbindung
- 74: Unterseite
- 76: Schubboden
- 78: Zusatzbatterie
- 80: Elektrische Verbindung
- 82: Elektrische Verbindung

## Patentansprüche

1. Transportfahrzeug (10) mit einer Transporteinrichtung (22), einem Fahrantrieb (34) und einem Nebenantrieb (54),
**dadurch gekennzeichnet, dass** der Nebenantrieb (54) leistungsschwächer als der Fahrantrieb (34) gestaltet ist und zum Bewegen mindestens einer Komponente (24, 68, 76, 86) der Transporteinrichtung (22) beim Beladen und/oder Entladen der Transporteinrichtung (22) vorgesehen ist.

2. Transportfahrzeug nach Anspruch 1,
**dadurch gekennzeichnet, dass** der Fahrantrieb (34) mit einem Verbrennungsmotor und der Nebenantrieb (54) mit einem Elektromotor gestaltet ist.

3. Transportfahrzeug nach Anspruch 1 oder 2,
**dadurch gekennzeichnet, dass** der Nebenantrieb (54) derart gestaltet ist, dass eine Kraft direkt auf die mindestens eine Komponente (24, 68, 76, 86) der Transporteinrichtung (22) übertragbar ist.

4. Transportfahrzeug nach einem der Ansprüche 1 oder 2,
**dadurch gekennzeichnet, dass** der Nebenantrieb (54) derart gestaltet ist, dass eine Kraft indirekt mittels einer Hydraulikpumpe (46) auf die mindestens eine Komponente (24, 68, 76, 86) der Transporteinrichtung (22) übertragbar ist.

5. Transportfahrzeug nach einem der Ansprüche 1 bis 4,
**dadurch gekennzeichnet, dass** die Transporteinrichtung (22) mit einer Trommel (24), vorzugsweise mit einer Mischtrommel für Beton gestaltet ist.

6. Transportfahrzeug nach einem der Ansprüche 1 bis 4,
**dadurch gekennzeichnet, dass** die Transporteinrichtung (22) einen vom Nebenantrieb (54) bewegbaren Schubboden (76) aufweist.

7. Transportfahrzeug nach einem der Ansprüche 1 bis 4,
**dadurch gekennzeichnet, dass** die Transporteinrichtung (22) einen vom Nebenantrieb (54) bewegbaren Abschieber (68) aufweist.

8. Transportfahrzeug nach einem der Ansprüche 1 bis 7,
**dadurch gekennzeichnet, dass** der Nebenantrieb (54) mit einem Reibrad (60) und einer Reibradlinie (62) gestaltet ist.

9. Transportfahrzeug nach einem der Ansprüche 1 bis 7,
**dadurch gekennzeichnet, dass** der Nebenantrieb (54) mit einem Zahnrad und einem Zahnkranz oder einem Zahnkranz gestaltet ist.

10. Transportfahrzeug nach einem der Ansprüche 1 bis 9,
**dadurch gekennzeichnet, dass** das Transportfahrzeug (10) eine Zusatzbatterie (78) aufweist, die separat von einer Batterie (36) des Fahrantriebs (34) angeordnet und dafür vorgesehen ist, den Nebenantrieb (54) mit Strom zu versorgen.
